# EUROPEAN PATENT APPLICATION

(11) **EP 1 031 696 A2**
(43) Date of publication of application: **30.08.2000**
(21) Application number: 00103250.7
(22) Date of filing: 17.02.2000
(51) Int. Cl.: E05F 15/00, H02H 7/085

(54) **Window operation control system using a pressure-sensitive sensor and a load sensor**

(30) Priority: 25.02.1999 JP 4802699; 28.06.1999 JP 18141799
(71) Applicant: ASMO CO., LTD., Kosai-city, Shizuoka-pref. 431-0493 (JP)
(72) Inventor: Iida, Takahiro, c/o Asmo Co., Ltd., Kosai-city, Shizuoka-pref. 431-0493 (JP)
(74) Representative: Pellmann, Hans-Bernd, Dipl.-Ing.

(57) **Abstract**

A window operation control system for vehicles detects pinching of a foreign object (1a) between a window frame (2) and a windowpane (4) in a window closing operation, and automatically stops or reverses the movement of the windowpane (4) in response to the detection of pinching. In an automatic window closing operation, the pinching is detected in response to an excessive external force to the frame (2) or an excessive load to a window driving motor (5) as long as the windowpane (4) is not moved close to the window frame, while the pinching is detected in response to only the excessive load as long as the windowpane (4) is moved close to the window frame (2). In a manual window closing operation, the pinching is detected in response to only the excessive load and irrespective of the external force.

## Description

The present invention relates to window operation control systems, and more particularly to a window opening/closing operation control system for a vehicle which is capable of preventing pinching of foreign objects in a window opening of a power window device or a sun roof device.

It is known in a window opening/closing operation control system (power window system) for vehicles to restrict continued movement of a windowpane in a window closing direction by stopping or reversing rotation of an electric motor (power window motor) which drives the windowpane, when pinching of a foreign object between a window frame and the windowpane is detected. The pinching is detected directly by a pressure-sensitive sensor provided along the window frame when a pressure applied to the pressure-sensitive sensor exceeds a predetermined pressure. Alternatively, it is detected indirectly by an electronic circuit when a drive current of the power window motor exceeds a predetermined current or when a rotation speed falls below a predetermined speed.

In the direct detection-type using the pressure-sensitive sensor, it is impossible to detect pinching until the foreign object touches the sensor. Thus, even if the foreign object is in contact with the top end of the windowpane, the power window motor continues to drive the windowpane until the windowpane rises close to the window frame. That is, it is impossible to detect pinching well in advance.

In the indirect detection-type, it is impossible to accurately detect pinching due to sliding friction of the windowpane in the window opening. As the window frame is provided with a rubber weather strip which seals a gap between the window frame and the windowpane, a sliding friction occurs between the windowpane and the weather strip when the windowpane is in its window closing operation near the window frame, that is, when the windowpane is raised to about 30 mm below the window frame. The sliding friction causes an increase in the drive current or a decrease in the rotation speed of the power window motor. Pinching of the foreign object is likely to be detected erroneously due to the change in the drive current or the rotation speed.

If the detection of pinching is disabled near the window frame to avoid the above erroneous detection, pinching of a thin or small object between the window frame and the windowpane cannot be detected.

It is proposed that the direct detection-type and the indirect detection-type are combined in AND-logic or OR-logic. In the case of AND-logic, the detection of pinching and the automatic restriction of continued window closing operation cannot be attained if either one of the two types fails to operate. In the case of OR-logic, the window closing operation is automatically restricted even if window closing operation should be continued for protection from burglars, as long as the burglar touches the sensor along the window frame.

It is therefore an object of the present invention to provide an improved window operation control.

It is another object of the present invention to provide a window operation control which is capable of detecting even a thin or small foreign object and preventing pinching well in advance.

It is a further object of the present invention to provide a window operation control which is capable of preventing pinching of a foreign object and restricting forced window opening.

According to a first aspect of the present invention, a load detector detects a load applied to a drive device for a movable body such as windowpane, a pressure sensor disposed along a frame for the movable body senses an external force applied thereto. The drive device is disabled to drive the movable body in a closing direction when the sensed external force exceeds a predetermined force, under a condition that the detected position of the movable body is more than a predetermined position in the closing direction. The drive device is further disabled to drive the movable body in the closing direction when the sensed external force exceeds the predetermined force or the detected load exceeds a predetermined load, under a condition that the detected position of the movable body is less than the predetermined position in the losing direction.

According to a second aspect of the present invention, the drive device is disabled to drive the movable body in the closing direction when the sensed external force exceeds the predetermined force or the detected load exceeds a predetermined load, under a condition that an automatic closing operation is selected. The drive device is also disabled to drive the movable body in the closing direction when the detected load exceeds the predetermined load, under a condition that a manual window closing operation is selected. In the manual closing operation, the drive device may alternatively be enabled to continue to drive the movable body in the closing direction irrespective of the sensed external force and the detected load.

According to a third aspect of the present invention, the drive means is enabled to continue to drive the movable body in the closing direction even when the sensed external force exceeds the predetermine force or the detected load exceeds the predetermine load, under a predetermined operation state. The predetermined operation state may be that an end of the movable body is in a predetermined range of distance from the frame, or that the manual closing operation is selected.

Other objects, features and advantages of the present invention will become more apparent from the following detailed description made with reference to the accompanying drawings. In the drawings:
Fig. 1 is a schematic view showing a power window system according to a first embodiment of the present invention;
Fig. 2 is a perspective view showing a pressure-sensitive sensor used in the first embodiment;
Fig. 3 is a diagram showing an electrical equivalent circuit of the pressure-sensitive sensor shown in Fig. 2;
Fig. 4 is a schematic view showing a rotation sensor and a windowpane position detection circuit used in the first embodiment;
Fig. 5 is an electric circuit diagram showing a window operation control circuit in the first embodiment;
Fig. 6 is an electric circuit diagram showing a window operation control circuit in a second embodiment of the present invention;
Fig. 7 is a schematic view showing a power window system according to a third embodiment of the present invention;
Fig. 8 is an electric circuit diagram showing a window operation control circuit in the third embodiment of the present invention;
Fig. 9 is an electric circuit diagram showing a window operation control circuit in a fourth embodiment of the present invention; and
Fig. 10 is an electric circuit diagram showing a window operation control circuit in a fifth embodiment of the present invention.

The present invention will be described further with reference to various embodiments shown in the drawings.

### [First Embodiment]

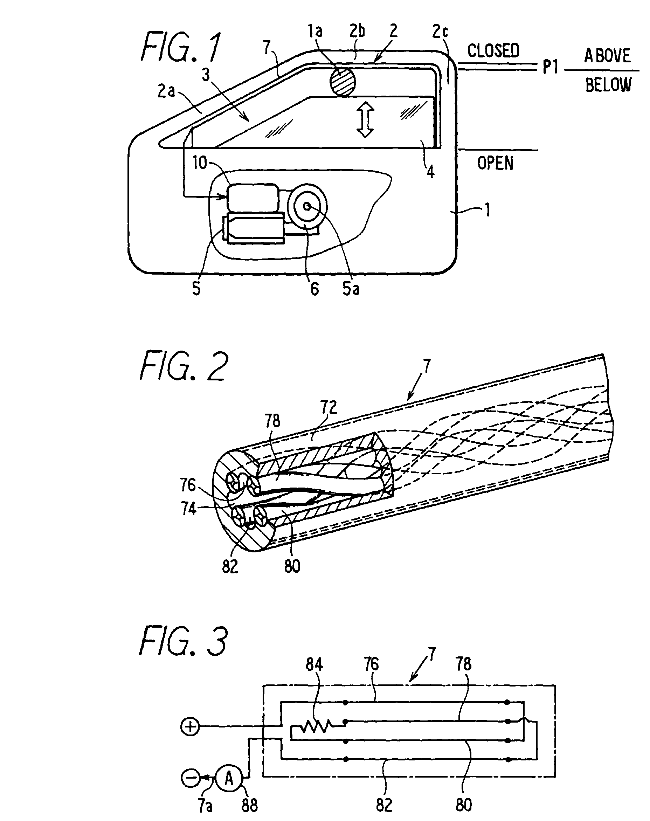

Referring first to Fig. 1, a vehicle door 1 has a window frame 2 which defines a window opening 3. The window frame includes a front inclined part 2a, an upper horizontal part 2b and a rear vertical part 2c. A windowpane 4 is movably disposed in the vehicle door 1. The windowpane 4 is driven by a power window motor 5 to move upward and downward for closing and opening the window opening 3. A rotation sensor 6 is provided to detect a rotation speed of the motor 5. A pressure-sensitive sensor 7 is attached to the window frame 2 along the parts 2a, 2b and 2c together with a rubber weather strip (not shown). The pressure-sensitive sensor 7 is connected to a control circuit 10 which controls power window motor operations.

The sensor 7 is constructed as shown in Fig. 2. It has an elongated outer cover tube 72 made of an elastic and electrically-insulating material. A cross(+)-shaped passage 74 is formed in the tube 72 in the longitudinal direction. The passage 74 is twisted around the central axis of the tube 72 as it extends in the longitudinal direction. Elastic electrodes 76, 78, 80 and 82 are disposed inside the tube 72 in an electrically-insulated manner. Each electrode comprises a number of intertwined fine copper wires.

The electrodes 76, 78, 80 and 82 are arranged spirally along the cross-shaped passage 74 and fixed to the inside surface of the tube 72. As a result, the electrodes 76, 78, 80 and 82 flex when the tube 74 elastically deforms. Specifically, some or all of the electrodes 76, 78, 80 and 82 contact one another when the tube 72 deforms to the extent that the cross-shaped passage 74 is closed. The electrodes 76, 78, 80 and 82 are separated again when the tube 72 restores its original tubular shape.

More specifically, as shown in Fig. 3, the electrodes 76 and 80 are electrically connected at respective one longitudinal ends, and the electrodes 78 and 82 are electrically connected at respective one longitudinal ends. The electrodes 78 and 80 are electrically connected through a resistor 84 at the respective other longitudinal ends. The electrodes 76 and 82 are electrically connected to a d.c. power source (not shown) at the respective other longitudinal ends. A current detector 88 is connected between the d.c. power source and the electrode 82.

Electric current normally flows from the electrode 76 to the electrode 82 through the resistor 84. However, it flows bypassing the resistor 84 when the outer tube 72 deforms to cause shorting among the electrodes 76, 78, 80 and 82, and the electric current increases. Thus, it can be checked by the current detector 88 whether an external force caused by a foreign object 1a (Fig. 1) is applied to the sensor 7, that is whether the foreign object 1a is pinched between the window frame 2 and the windowpane 4.

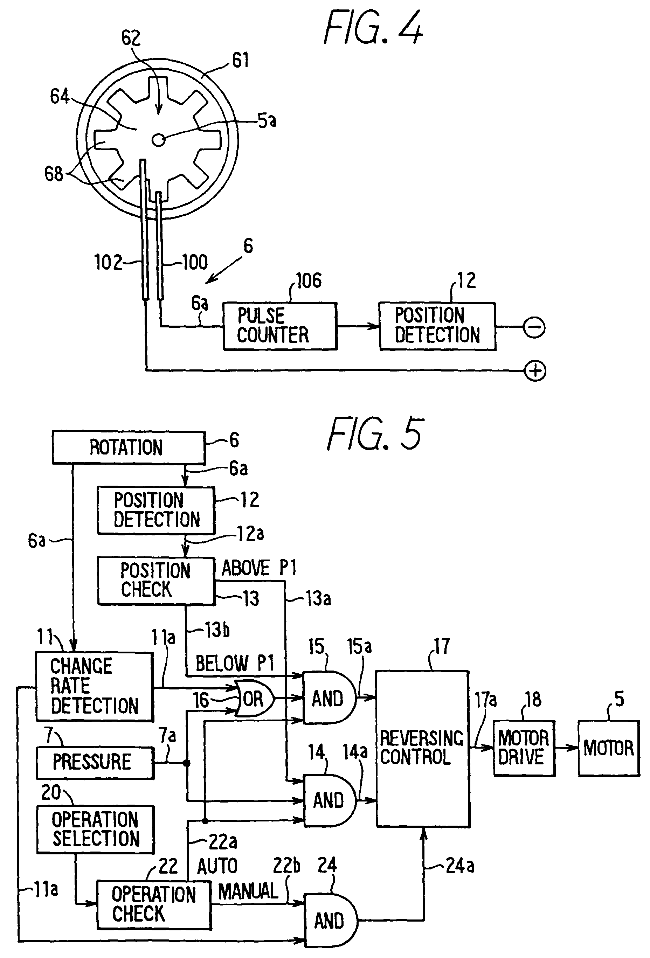

The rotation sensor 6 is positioned adjacent a side surface of a speed reduction gear of the motor 5 and is constructed as shown in Fig. 4. It has an electrically-insulating disk-shaped base 61 and a pulse plate 62 made of a conductive sheet fixed to the base 61. The pulse plate 62 has a central disk part 64 which is coaxial with an output shaft 5a of the motor 5 to rotate with the output shaft 5a. A conductive contact piece 102 is held in continuous contact with the disk part 64.

The pulse plate 62 also has a plurality of teeth 68 extending radially outward from the disk part 64 and equiangularly spaced apart from the adjacent ones in the circumferential direction. A conductive contact piece 100 is held to contact the teeth 68 intermittently when the pulse plate 62 rotates with the output shaft 5a.

The contact pieces 100 and 102 are electrically connected to the d.c. power source through a pulse counter 106 and a position detection circuit 12. As the contact pieces 100 and 102 are rendered conductive and non-conductive alternately when the pulse plate 62 rotates, pulse signals 6a are produced from the contact piece 100. The number of pulse signals 6a is proportional to a rotation of the motor 5 and hence the distance of movement of the windowpane 4. The pulse counter 106 counts the pulse signals, and the position detection circuit 12 detects positions of the windowpane 4, that is, positions of the top end of the windowpane 4, based on the count output of the pulse counter 106.

The rotation sensor 6 and the sensor 7 are connected to the control circuit 10 as shown in Fig. 5. The rotation sensor 6 is connected to a speed change rate detection circuit 11 which operates as a load detection circuit and detects the rate of change of the rotation speed from the pulse signals 6a. The position detection circuit 12 is connected to a position check circuit 13 which checks in response to a position detection signal 12a whether the top end of the windowpane 4 has reached a predetermined position P1 close to uppermost position of the windowpane 4, that is, closed position of the window opening 3.

The position check circuit 13 is connected to a first AND gate 14 and a second AND gate 15. It applies an upper region signal 13a to the first AND gate 14 when the top end of the windowpane 4 is above the predetermined position P1, and a lower region signal 13b to the second gate 15 when the top end of the windowpane 4 is below the predetermined position P1.

The speed change rate detection circuit 11 is connected to an OR gate 16 and a third AND gate 24. It applies a load detection signal 11a to the OR gate 16 when the change rate of the motor rotation speed exceeds a predetermined rate to indicate that the load applied to the motor 5 is in excess of a predetermined load. The load detection signal 11a is applied to the second AND gate 15 through the OR gate 16.

The sensor 7 is connected to the first AND gate 14 and the OR gate 16, so that a pressure detection signal 7a indicative of pinching of the foreign object 1a is applied to the first AND gate 14 and the OR gate 16. Thus, the OR gate 16 applies at least one of the load signal 11a and the pressure detection signal 7a to the second AND gate 15.

An operation selection switch 20 is provided in a vehicle compartment and connected to the third AND gate 24 through an operation check circuit 22. The selection switch 20 is for selecting either one of a manual window closing operation and an automatic window closing operation. It is to be noted that the windowpane 4 is driven to close the window opening 3 only while the selection switch 20 is operated in the manual window closing operation, and the windowpane 4 is driven to fully close the window opening 3 once the selection switch 20 is operated in the automatic window closing operation.

The operation check circuit 22 checks which one of the manual window closing operation and the automatic window closing operation is selected. It applies an automatic operation signal 22a to the first AND gate 14 and the second AND gate 15 when the automatic operation is selected, and a manual operation signal 22b to the third AND gate 24 when the manual operation is selected.

The AND gates 14, 15 and 24 are connected to a reversing control circuit 17 which is in turn connected to a motor drive circuit 18. The control circuit 10 operates as follows in the automatic window closing operation and the manual window closing operation.

### (Automatic Operation)

In the automatic window closing operation, the first AND gate 14 and the second AND gate 15 are operable in response to the automatic signal 22a from the operation check circuit 22.

After the automatic operation is selected by the selection switch 20, the operation check circuit 22, the first AND gate 14, the second AND gate 15, the reversing control circuit 17 and the motor drive circuit 18 operate to drive the motor 5 in a direction to move the windowpane 4 upward to close the window opening 3. When the sensor 7 and the position check circuit 13 apply the respective signals 7a and 13a to the first AND gate 14 in addition to the automatic operation signal 22a, the first AND gate 14 applies a pinching signal 14a to the reversing control circuit 17 to indicate that the foreign object 1a is pinched under the condition that the top end of the windowpane 4 is above the predetermined position P1. The reversing control circuit 17 produces a motor reversing signal 17a to stop or reverse the rotation of the motor 5, thereby stopping a further upward movement or causing a downward movement of the windowpane 4.

In this instance, it is preferred to set the predetermined position P1 to about 20 mm to 30 mm below the uppermost position of the windowpane 4 at which the window opening 3 is fully closed. That is, the predetermined position P1 is set to correspond to a position at which the top end of the windowpane 4 comes into contact with the weather strip attached to the window frame 2. Thus, even when the foreign object 1a is thin or small and hence the speed change rate detection circuit 11 cannot detect it due to existing friction between the windowpane 4 and the weather strip, the pinching of a small or thin foreign object above the predetermined position P1 can be detected by the sensor 7.

On the other hand, when the top end of the windowpane 4 is below the predetermined position P1, either the speed change rate detection circuit 11 or the sensor 7 detects the pinching of the foreign object 1a so that the second AND gate 15 produces a pinching signal 15a and the reversing control circuit 17 stops or reverse the rotation of the motor 5 by the motor reversing signal 17a. Thus, the pinching of the foreign object 1a can be detected even before the windowpane 4 is moved upward close to the closed position.

### (Manual Operation)

In the manual window closing operation, the third AND gate 24 is operable in response to the manual signal 22b from the operation check circuit 22. Only when the speed change rate detection circuit 11 produces the load signal 11a indicative of a large load, the third AND gate 24 produces a pinching signal 24a over an entire range of movement of the windowpane 4. The reversing control circuit 17 stops or reverse the rotation of the motor 5 in response to the pinching signal 24a from the third AND gate 24.

### [Second Embodiment]

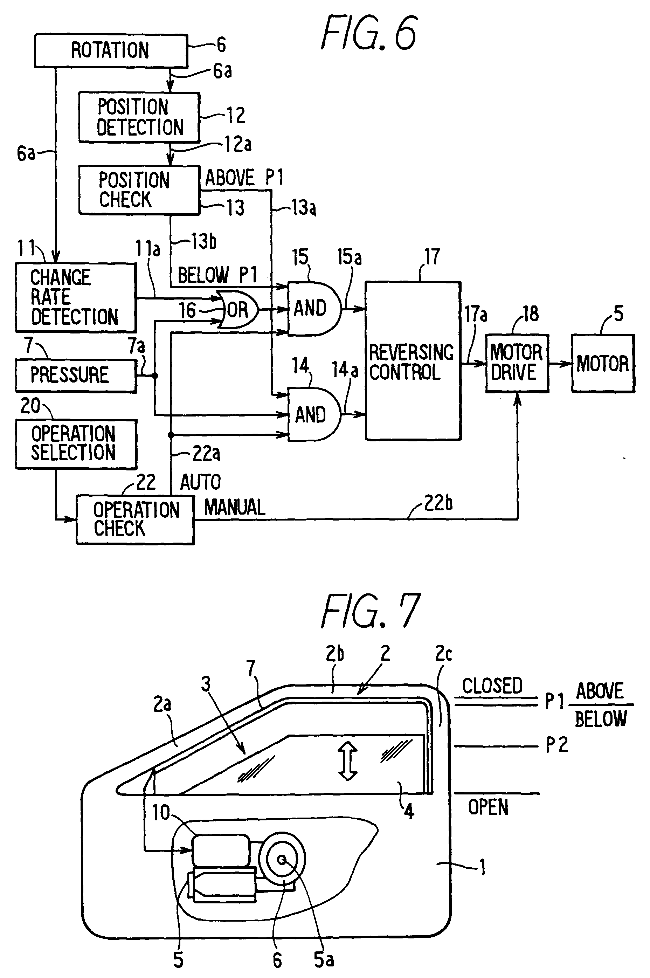

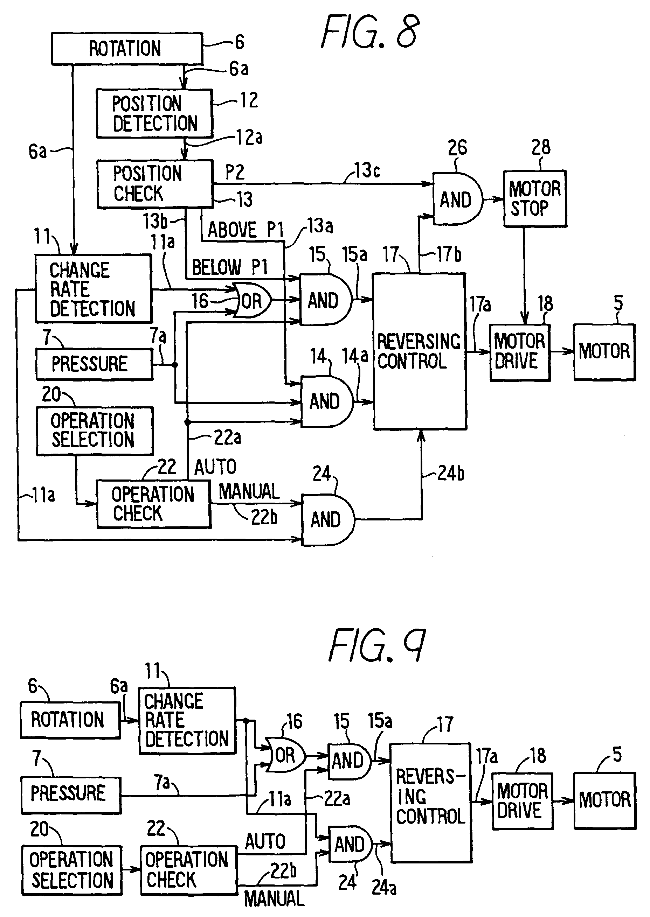

In a second embodiment, the control circuit 10 is constructed as shown in Fig. 6.

Specifically, the operation check circuit 22 is connected to the motor drive circuit 18 without third AND gate, so that the motor 18 may be driven without being stopped or reversed under the manual window closing operation. Thus, the control circuit 10 controls the motor 5 irrespective of the pinching of the foreign object 1a in the manual window closing operation, although it operates in the same manner as in the first embodiment during the automatic window closing operation. According to this embodiment, the automatic stop or reversing of the window closing movement of the windowpane 4 is canceled by the selection switch 20 so that a burglar as the foreign object 1a may not be allowed to reach inside of the vehicle with ease.

### [Third Embodiment]

In a third embodiment, another predetermined position (second position) P2 is provided as shown in Fig. 7 in addition to the predetermined position (first position) P1 of the foregoing embodiments. The second position P2 is set at a lower position than the first position so that the automatic window opening operation effected upon detection of the pinching of the foreign object 1a in the foregoing embodiments is restricted or disabled when the top end of the windowpane 4 is lowered to the second position.

The control circuit 10 is constructed as shown in Fig. 8. Specifically, in addition to the control circuit configuration of the first embodiment, a fourth AND gate 26 is connected to the position check circuit 13 and the reversing control circuit 17, and a motor stop circuit 28 is connected between the fourth AND gate 26 and the motor drive circuit 18. A motor reversing signal 17b is applied from the reversing control circuit 17 to the AND gate 26 in response to detection of pinching of the foreign object 1a, and a position detection signal 13c indicative of lowering of the top end of the windowpane 4 to the second position P2 is applied from the position detection circuit 13 to the fourth AND gate 26. The fourth AND gate 26 thus produces an output signal to the motor stop circuit 28 which in turn stop the motor rotation through the motor drive circuit 18. Here, the second position P2 is set to preferably about 15 cm to 20 cm below the uppermost position of the windowpane 4. As a result, even when the windowpane 4 is automatically moved downward upon detection of the pinching, falling of a passenger from the inside to the outside of the vehicle can be restricted by stopping too much lowering of the windowpane 4.

The third embodiment may be modified so that an initial position of starting the upward movement of the windowpane 4 is memorized and the automatic downward movement of the windowpane 4 upon detection of the pinching is stopped at the memorized initial position.

### [Fourth Embodiment]

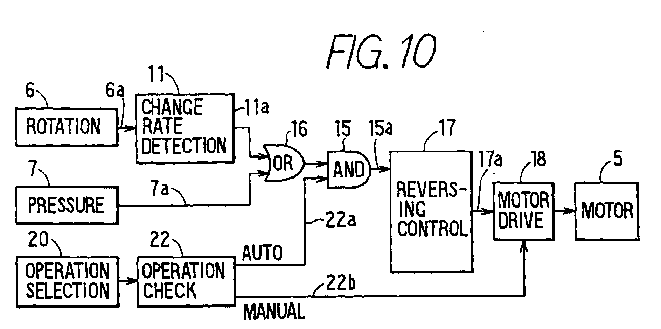

In a fourth embodiment, the control circuit 10 is constructed as shown in Fig. 9 so that the automatic window closing operation is disabled irrespective of the position of the windowpane 4. That is, this embodiment is differentiated from the foregoing embodiments in that the position detection circuit 12, the position check circuit 13 and the AND gate 14 in the foregoing embodiments are not provided.

According to this embodiment, the automatic window closing operation selected by the selection switch 20 is disabled automatically by the OR gate 16, the AND gate 15 and the reversing control circuit 17 any time when either or both of the speed change rate detection circuit 11 or the sensor 7 detects the pinching of foreign object 1a. The manual window closing operation selected by the selection switch 20 is disabled automatically by the AND gate 24 and the reversing control circuit 17 only when the speed change rate detection circuit 11 detects the pinching of foreign object 1a. Thus, even when a foreign object, such as a passenger or a burglar, touches the sensor 7 on the window frame 2 inadvertently during the manual window closing operation, the window closing operation can be continued unless the motor speed change rate increases excessively.

### [Fifth Embodiment]

In a fifth embodiment, the control circuit 10 is constructed as shown in Fig. 10. This embodiment is a modification of the fourth embodiment in that the manual window closing operation selected by the selection switch 20 can be effected irrespective of the pinching of foreign object as in the second embodiment shown in Fig. 6. According to this embodiment, a burglar is disabled to reach the inside of the vehicle compartment through the window opening 3, because the window closing operation can be continued by the selection of manual window closing operation.

The present invention should not be limited to the foregoing embodiments but may be altered or modified further without departing from the spirit of the invention.

For instance, the rotation sensor 6 may be modified to a non-contact type such as a photo-electric type or Hall-IC type. The window operation control system may be applied to other apparatuses such as a sun-roof system, slide door system or home window/door operation system.

A window operation control system for vehicles detects pinching of a foreign object (1a) between a window frame (2) and a windowpane (4) in a window closing operation, and automatically stops or reverses the movement of the windowpane (4) in response to the detection of pinching. In an automatic window closing operation, the pinching is detected in response to an excessive external force to the frame (2) or an excessive load to a window driving motor (5) as long as the windowpane (4) is not moved close to the window frame, while the pinching is detected in response to only the excessive load as long as the windowpane (4) is moved close to the window frame (2). In a manual window closing operation, the pinching is detected in response to only the excessive load and irrespective of the external force.

## Claims

1. A window operation control system for a vehicle having a movable body (4) for opening and closing a window opening (3) defined by a window frame (2), the system comprising:
drive means (5, 17, 18) for driving the movable body to open and close the window opening;
load detection means (6, 11) for detecting a load applied to the drive means;
sensor means (7) disposed along the window frame for sensing an external force applied thereto;
position detection means (6, 12, 13) for detecting a position of the movable body;
first control means (14) for disabling the drive means to drive the movable body in a window closing direction when the sensed external force exceeds a predetermined force, under a condition that the detected position of the movable body is more than a predetermined position (P1) in the window closing direction; and
second control means (15) for disabling the drive means to drive the movable body in the window closing direction when the sensed external force exceeds the predetermined force or the detected load exceeds a predetermined load, under a condition that the detected position of the movable body is less than the predetermined position in the window closing direction.

2. The system according to claim 1, wherein:
the first control means (14) and the second control means (15) are constructed to control the drive means to drive the movable body in a window opening direction in respective drive means disabling operations; and
third control means (26) is provided for disabling the drive means to drive the movable body in the window opening direction when the detected position of the movable body reaches another predetermined position (P2).

3. The system according to claim 2, wherein:
the another predetermined position (P2) is set to be more away from the window frame in the window opening direction than the predetermined position.

4. The system according to claim 1, further comprising:
manual selection means (20) for manually selecting either one of an automatic window closing operation and a manual window closing operation; and
third control means (22) for disabling, irrespective of the detected position and the sensed external force, the drive means to drive the movable body in the window closing direction only when the detected load exceeds the predetermined load over an entire range of movement of the movable body, under a condition that the manual window closing operation is selected.

5. The system according to claim 1, further comprising:
manual selection means (20) for manually selecting either one of an automatic window closing operation and a manual window closing operation; and
third control means (22) for enabling, irrespective of the sensed external force and the detected load, the drive means to drive the movable body in the window closing direction under a condition that the manual window closing operation is selected.

6. The system according to any one of claims 1 to 5, wherein:
the drive means (5, 17, 18) includes an electric motor (5); and
the position detection means (6, 12, 13) includes a counter (106) for counting a rotation of the motor to detect the position of the movable body.

7. A window operation control system for a vehicle having a movable body (4) for opening and closing a window opening (3) defined by a window frame (2), the system comprising:
drive means (5, 17, 18) for driving the movable body to open and close the window opening;
load detection means (6, 11) for detecting a load applied to the drive means;
sensor means (7) disposed along the window frame for sensing an external force applied thereto;
manual selection means (20) for manually selecting either one of an automatic window closing operation and a manual window closing operation;
first control means (15) for disabling the drive means to drive the movable body in the window closing direction when the sensed external force exceeds the predetermined force or the detected load exceeds a predetermined load, under a condition that the automatic window closing operation is selected; and
second control means (24) for disabling the drive means to drive the movable body in the window closing direction when the detected load exceeds the predetermined load, under a condition that the manual window closing operation is selected.

8. A window operation control system for a vehicle having a movable body (4) for opening and closing a window opening (3) defined by a window frame (2), the system comprising:
drive means (5, 17, 18) for driving the movable body to open and close the window opening;
load detection means (6, 11) for detecting a load applied to the drive means;
sensor means (7) disposed along the window frame for sensing an external force applied thereto;
manual selection means (20) for manually selecting either one of an automatic window closing operation and a manual window closing operation;
first control means (15) for disabling the drive means to drive the movable body in the window closing direction when the sensed external force exceeds the predetermined force or the detected load exceeds a predetermined load, under a condition that the automatic window closing operation is selected; and
second control means (22) for continuing the drive means to drive the movable body in the window closing direction irrespective of the sensed external force and the detected load, under a condition that the manual window closing operation is selected.

9. A control system for a movable body (4) which opens and closes an opening (3) defined by a frame (2), the system comprising:
drive means (5, 17, 18) for driving the movable body to open and close the opening;
load detection means (6, 11) for detecting a load applied to the drive means;
sensor means (7) disposed along the frame for sensing an external force applied thereto;
control means (17) for disabling the drive means to drive the movable body in the opening closing direction when at least one of conditions that the sensed external force exceeds the predetermined force and the detected load exceeds a predetermined load; and
cancel means (6, 12, 13, 14, 15, 20, 22, 24) for disabling a disabling operation of the control means under a predetermined operation state.

10. The control system according to claim 9, wherein:
the cancel means (6, 12, 13, 14, 15, 20, 22, 24) includes a position detection means (6, 12, 13) which detects as the predetermined operation state that an end of the movable body is in a predetermined range of distance from the frame.

11. The control system according to claim 9, wherein:
the cancel means (6, 12, 13, 14, 15, 20, 22, 24) includes manual selection means (20) which selects a manual opening closing operation as the predetermined operation state.

12. The control system according to claim 9, wherein:
the cancel means (6, 12, 13, 14, 15, 20, 22, 24) includes a position detection means (6, 12, 13) which detects as the predetermined operation state that an end of the movable body is in a predetermined range of distance from the frame, and manual selection means (20) which selects a manual opening closing operation as the predetermined operation state.
